# EUROPEAN PATENT SPECIFICATION

(11) **EP 2 736 254 B1**
(45) Date of publication and mention of the grant of the patent: **04.07.2018**
(21) Application number: 11869857.0
(22) Date of filing: 22.07.2011
(51) Int. Cl.: H04N 19/167, H04N 19/96, H04N 19/105, H04N 19/176

(54) **VIDEO DECODING METHOD AND IMAGE ENCODING METHOD**
VIDEODEKODIERUNGSVERFAHREN UND BILDKODIERUNGSVERFAHREN
PROCÉDÉ DE DÉCODAGE VIDÉO ET PROCÉDÉ DE CODAGE D'IMAGE

(43) Date of publication of application: 28.05.2014
(73) Proprietor: Hitachi, Ltd., Tokyo 100-8280 (JP)
(72) Inventor: YOKOYAMA, Toru, Chiyoda-ku Tokyo 100-8280 (JP); MURAKAMI, Tomokazu, Chiyoda-ku Tokyo 100-8280 (JP)
(74) Representative: Strehl Schübel-Hopf & Partner
(86) International application number: PCT/JP2011/004129
(87) International publication number: WO 2013/014693

(56) References cited:
- WO-A2-2010/039728
- JP-A- 10 150 664
- JP-A- 11 164 305
- JP-A- 2003 111 082
- JP-A- 2006 129 326
- JP-A- 2006 180 014
- JP-A- 2010 010 950
- US-A1- 2011 096 834
- DOCUMENT: JCTVC-B205, OUTPUT DOCUMENT(DRAFT007), ITU-T, 2010.10.09: 'Test Model under Consideration' TEST MODEL UNDER CONSIDERATION, JOINT COLLABORATIVE TEAM ON VIDEO CODING (JCT-VC) OF ITU-T SG16 WP3 AND ISO/IEC JTC1/SC29/WG11 2ND MEETING 09 October 2010, GENEVA, CH, XP008169133

## Description

### Technical Field

The present invention relates to technology for encoding moving images signals.

### Background Art

The video encoding standard typified by ITU-TH.264 performs encoding by partitioning the overall image in coding units called macroblocks which are each 16 pixels × 16 pixels.

In H.264, a prediction value for pixel values is set within the target macroblock by utilizing the peripheral pixels and the prior and subsequent pictures of the target macroblock for encoding, and the prediction error between the encoding target pixel and the predicted value is set as the entropy coding.

In the prediction of pixel values within the macroblock described above, intra-prediction that predicts from the peripheral pixels, and inter-prediction that predicts from the prior and subsequent picture pixels can be selected for each macroblock according to the pattern within the macroblock. Prediction can also be performed by dividing (the overall image) into prediction blocks even smaller than 16 pixels × 16 pixels.

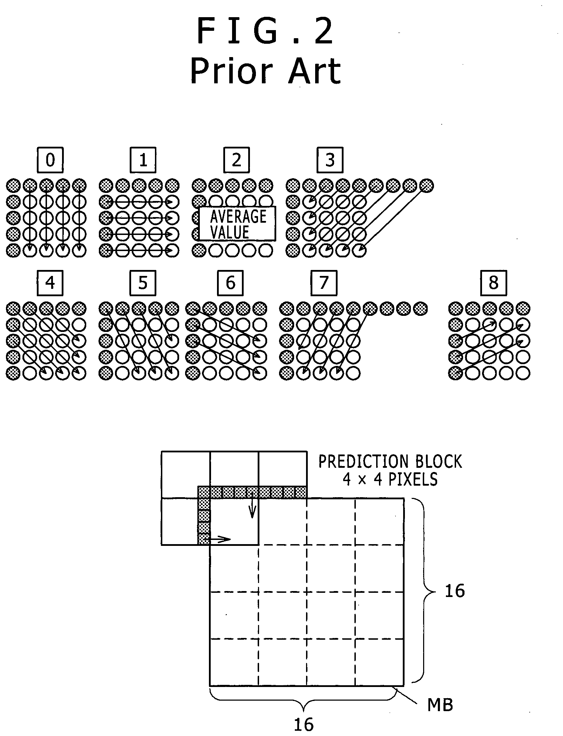

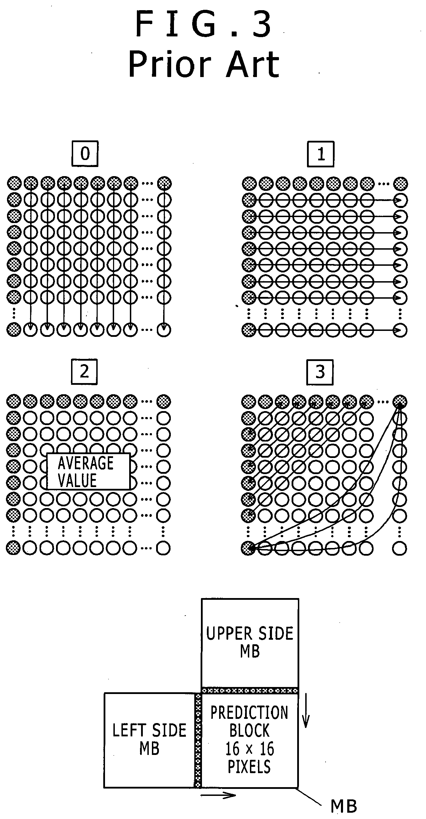

As shown in Fig. 2, in the intra-prediction of H.264, pixels within the prediction block can for example be predicted by partitioning the 16 pixels × 16 pixels macroblocks into sixteen prediction blocks of 4 pixels × 4 pixels each, and copying the peripheral pixels oriented in the nine directions shown from indices 0 to 8 in Fig. 2 for each of the prediction blocks. Moreover as shown in Fig. 3, the pixels within the prediction block can be predicted by copying the peripheral pixels in the four directions shown from index 0 to 3 in the figure in the 16 pixels × 16 pixels prediction block, without partitioning the macroblock.

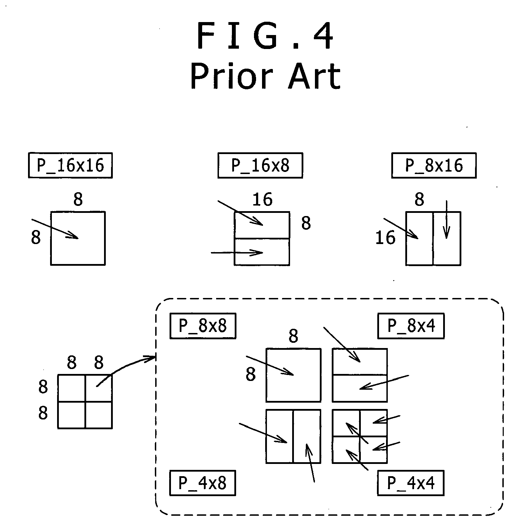

The interior of the macroblock can also be partitioned into smaller prediction blocks in the same way using the inter-prediction of H.264 to set motion vectors for each of the prediction blocks. As shown in Fig. 4 for example, when the predicting motion from past pictures, the macroblock can be partitioned into prediction blocks of 16 pixels × 16 pixels, 16 pixels × 8 pixels, 8 pixels × 16 pixels, and 8 pixels × 8 pixels (in this case each of the prediction blocks can be further partitioned into prediction blocks of 8 pixels × 4 pixels, 4 pixels × 8 pixels, and 4 pixels × 4 pixels), and respectively different motion vectors can be set here for these prediction blocks.

As described above, the prediction accuracy can be enhanced and the compression rate can be improved at times such as when there are different pattern boundaries within the macroblock by partitioning the interior of the macroblock into prediction blocks and predicting each of the partitioned prediction blocks.

However, the related art technology represented in H.264 is in all cases limited to a macroblock size of 16 pixels × 16 pixels, and incapable of predicting pixels in larger units or smaller units (than 16 pixels × 16 pixels).

Further, selection of intra-prediction or inter-prediction is limited to macroblock unit settings so that only units smaller than 16 pixels × 16 pixels can be selected.

In view of the aforementioned problems, patent literature 1 is capable of subdividing a 16 pixel × 16 pixel block into any of 8 pixels × 8 pixels, 4 pixels × 4 pixels, or 2 pixels × 2 pixels according to a quadtree structure, and changing the prediction mode according to these block sizes.

### Citation List

### Patent Literature

Patent literature 1: Japanese Unexamined Patent Application Publication (Translation of PCT Application) No. 2007-503784 US2011096834 regards quadtree coding of transform coded residuals and encoding information signalling in which CU non-zero coefficients are encoded.

WO2010039728 regards quadtree coding with prediction unit size selection based on calculated coding costs for alternative splitting (NxN, N/2XN, NXN/2, N/2XN/2).

JP2006180014 regards selection of best inter prediction unit size (8x8, 16x16).

### Summary of Invention

### Technical Problem

In the video encoding technology disclosed in patent literature 1, when the coding unit blocks are partitioned, prediction processing on macroblocks partitioned into coding units is performed. Therefore when the number of partitioned macroblocks in the quadtree structure is increased, the coding quantity of the prediction information increases by a corresponding amount and the compression ratio drops.

In view of the aforementioned circumstances, a purpose of the present invention is to provide a technology for reducing the information quantity utilized for describing macroblock prediction information.

### Solution to Problem

The terminology is defined prior to describing the method for achieving the above objective. In these specifications, CU (coding units) are used to distinguish variable-sized blocks (or partitions) selectable by the prediction mode from macroblocks of the related art (such as H264AVC).

As a method to achieve the above objectives, prediction processing of the certain encoding target CU can be achieved on the encoding side by selecting either of utilizing a portion of the unchanged prediction images on a larger and upper level CU (hereafter called parent CU) than the encoding target CU; or performing the respective prediction processing on the encoding target CU.

Prediction processing of the certain encoding target CU is achieved by selecting either the utilizing a portion of the unchanged prediction images on a larger and upper level CU (hereafter called parent CU) than the encoding target CU or performing the respective prediction processing on the encoding target CU, by storing flag information indicating either of the selections in the encoding stream and by reading out the flag information on the decoding side.

In the related art technology for example, the coding target CU is partitioned into the four sections CU1-CU4, however when only CU1 has a small prediction error and CU2-CU4 have low prediction accuracy, the CU prediction results are used to generate a CU prediction image, and an image equivalent to the CU1 region which is a portion of the CU prediction image, is extracted and set as the prediction image. The above steps eliminate the need for prediction processing information for the encoding targets CU2-CU4 so the quantity of information can be reduced.

In the related art, no parent CU encoding data was generated when encoding by using the encoding target CU so predictions were made using each CU unit even for images predictable with just one encoding target CU. However, if a portion of the prediction image for upper level CU is utilized just as described above, then the information quantity for describing the CU prediction processing can be reduced and the compression ratio improved.

### Advantageous Effects of Invention

The present invention is an image encoding and decoding method utilizing variable CU having a plurality of prediction unit block sizes; and capable of improving the compression ratio by reducing the information quantity for utilizing the CU prediction processing.

### Brief Description of Drawings

Fig. 1 is a drawing for showing the overall structure of the image encoding device of the first embodiment;
Fig. 2 is a drawing for describing an example of the intra-prediction processing of the related art;
Fig. 3 is a drawing for describing an example of the intra-prediction processing of the related art;
Fig. 4 is a drawing for describing an example of the inter-prediction processing of the related art;
Fig. 5 is a drawing for describing the principle of CU partitioning;
Fig.6 is a drawing for describing an example of CU partitioning in quadtree structure;
Fig. 7 is a drawing for describing an example of the syntax within the encoding stream by CU partitioning in the related art;
Fig. 8 is a drawing for describing an example of the effective application of the present invention;
Fig. 9 describes an example of the CU partitioning of the first embodiment;
Fig. 10 is a drawing for describing an example of the syntax within the encoding stream by CU partitioning of the first embodiment;
Fig. 11 is a drawing for describing an example of the synthesis of prediction images during CU partitioning in the first embodiment;
Fig. 12 is a drawing for describing another example of the synthesis of prediction images during CU partitioning in the first embodiment;
Fig. 13 is a drawing for describing the processing during intra-prediction in the synthesis processing for prediction images during CU partitioning in the first embodiment;
Fig. 14 is a drawing showing the overall structure of the prediction mode setter unit
Fig. 15 is a drawing showing the overall structure of the image decoding device of the first embodiment; and
Fig. 16 is a drawing showing the overall structure of the prediction selector unit of the first embodiment.

### Description of Embodiments

The present invention is capable of reducing the prediction information quantity during the encoding that accompanies the expansion or reduction of coding unit blocks (hereafter referred to as CU and Coding Unit) by omitting the prediction processing of CU partitioned by utilizing prediction images of pre-partitioned parent CU, from the prediction processing of partitioned CU.

The embodiment is described while referring to the accompanying drawings. The present embodiment is merely an example for implementing the present invention and attention paid to the fact that the embodiment does not limit the technical range of the present invention. Also, the same reference numerals are attached to common structural items in the drawings.

### First Embodiment

### <Structure of the image encoding device>

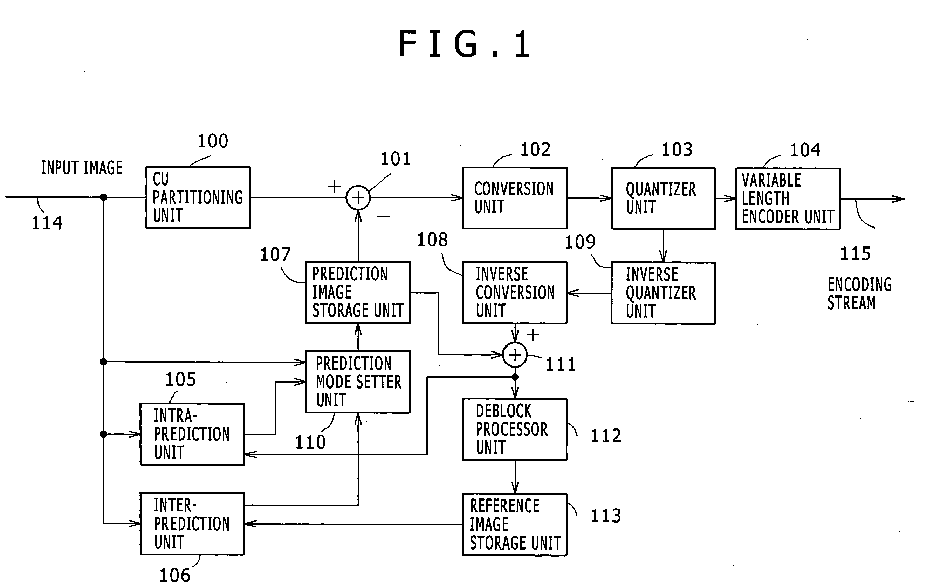

Fig. 1 is a drawing showing the overall structure of the image encoding device of the first embodiment.

The image encoding device in Fig. 1 contains a CU partitioning unit 100 to set the CU size; a differential unit 101 to generate a prediction differential image from an input image 114 and the prediction image stored in a prediction image storage unit 107; a converter unit 102 to perform direct conversion of the prediction differential image by DCT, etc.; a quantizer unit 103 to quantize the converted signal; and a variable length encoder unit 104 to encode the quantized signal; and output an encoding stream 115.

The video encoding device of the present embodiment includes two prediction processing systems for generating prediction images described above. A first system utilizes inter-prediction and so in order to acquire reference images for the next input image includes: an inverse quantizer unit 109 to inverse quantize the quantization signal output by the quantizer unit 103; an inverse converter unit 108 to inversely convert the inverse quantized signals and obtain prediction differential images, an adder unit 111 to add the converted prediction differential image and the prediction image from the prediction image storage unit 107; and a deblock processor unit 112 to obtain a reference image with the block noise removed from the added image. The first system further includes a reference image storage unit 113 for storing the obtained reference images, and an inter-prediction unit 106 to predict the motion between the input image 114 and the reference image. A second system utilizes intra-prediction and therefore includes an intra-prediction unit 105 to perform screen internal prediction from the input image 114.

The processing by the prediction mode setter unit 110 is described later and the prediction processing estimated as having the highest prediction efficiency is set by utilizing the two prediction processing system described above, or namely the inter-prediction image from the inter-prediction unit 106, and the screen internal prediction image from the intra-prediction unit 105. Here, the markers for prediction efficiency are listed for example as prediction error energy but prediction images (namely, prediction methods) that take into account the similarity with the neighboring CU prediction method (prediction between screens or screen internal prediction) and so on may be selected.

Prediction images obtained by the prediction method that was set, are stored in the prediction image storage unit 107 and are utilized to generate prediction difference images with the input image 114. Information relating to the prediction mode (namely inter-prediction or intra-prediction, and the prediction unit block sizes for each case) selected by the prediction mode setter unit 110 is sent to the variable length encoder unit 104, and is stored in a portion of the encoding stream 115.

A feature of the present embodiment is the prediction processing set by the prediction mode setter unit 110. However, the partition pattern of the CU is related to the setting of the prediction processing so the processing content of the CU partition unit is described below.

### <Processing content (encoding side) of CU partitioning unit>

The processing content of the CU partitioning unit 100 is hereafter described while referring to the drawings.

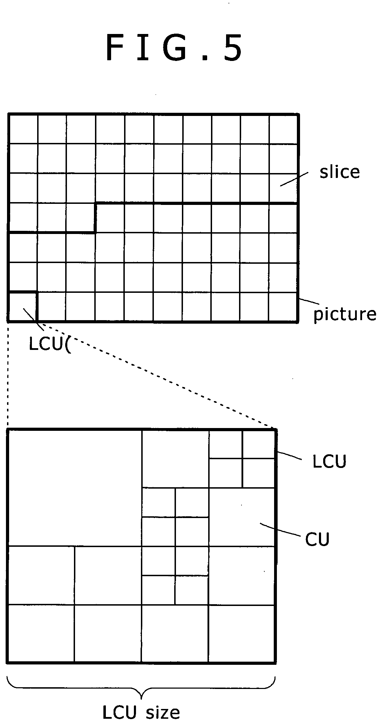

Fig. 5 is a drawing for describing the concept of the CU. In the present embodiment, the encoding process unit block equivalent to the macroblock in the technology of the related art is described as a CU (Coding Unit). In the present embodiment, the CU is assumed to have the following types of properties. However, the present embodiment is not limited to the assumptions made here.
(1) The CU is a square
(2) The maximum size and the minimum size of the CU are recorded in the encoding stream or are defined as a standard
(3) A quadtree structure is utilized to partition from the maximum CU to the child CU in levels of four (partitioned) units

In Fig. 5, the CU having a maximum size is referred to as the LCU (Largest Coding Unit) and that size (number of pixels in the LCU vertical or the horizontal direction) is referred to as the LCU size. In the present embodiment, the LCU size is assumed as a power of 2 however the usage of the present embodiment is not limited to the power of 2.

One picture is partitioned into LCU units as shown in Fig. 5. A grouping of consecutive LCU is defined as a slice. This principle is equivalent to the macroblock of the related art. Each LCU is partitioned into levels of four (partitioned) units by a quadtree structure.

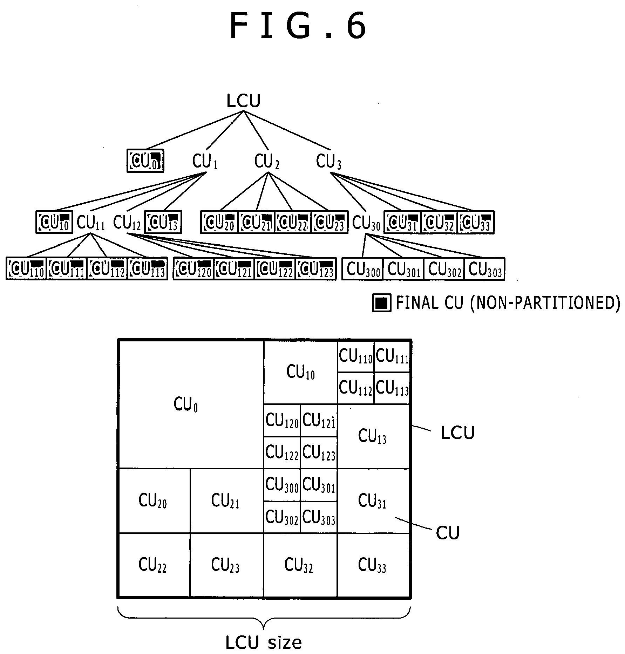

Fig. 6 is a drawing showing an example of a CU partitioned in a quadtree structure. The LCU as shown in this same figure is partitioned into the four units, CU₀, CU₁, CU₂, and CU₃. Here, CU₀ is ultimately kept as a CU without being partitioned. Also, CU₁ is partitioned into the four units CU₁₀, CU₁₁, CU₁₂, and CU₁₃; CU₂ is partitioned into the four units CU₂₀, CU₂₁, CU₂₂, and CU₂₃; and CU₃ is partitioned into the four units CU₃₀, CU₃₁, CU₃₂, and CU₃₃. Among these sub-partitioned CU, CU₁₁ is further partitioned into the four units CU₁₁₀, CU₁₁₁, CU₁₁₂, and CU₁₁₃; CU₁₂ is further partitioned into the four units CU₁₂₀, CU₁₂₁, CU₁₂₂, and CU₁₂₃; and CU₃₀ is further partitioned into the four units CU₃₀₀, CU₃₀₁, CU₃₀₂, and CU₃₀₃, and all other CU are ultimately maintained as CU. The LCU are in this way partitioned into levels of four (partitioned) units, and the CU size can be sub-partitioned until the minimum size is reached. In these specifications, the CU₁₀, CU₁₁, CU₁₂, and CU₁₃ obtained by partitioning the CU1 are referred to as the child CU of CU₁. Conversely, CU1 refers to the parent CU of CU₁₀, CU₁₁, CU₁₂, and CU₁₃.

The term CU indicates a coding unit and strictly speaking, prediction processing and conversion processing are performed on each CU. However, when referring to the parent CU in these specifications, also note that prediction processing is only performed on this CU when necessary and no conversion processing is performed.

In the above quadtree structure, when the ratio of the maximum size to minimum size is 2^{N} (n-th power of 2), the partition pattern can be expressed by setting 1 bit in a flag as in the related art to show whether an individual CU is partitioned or not.

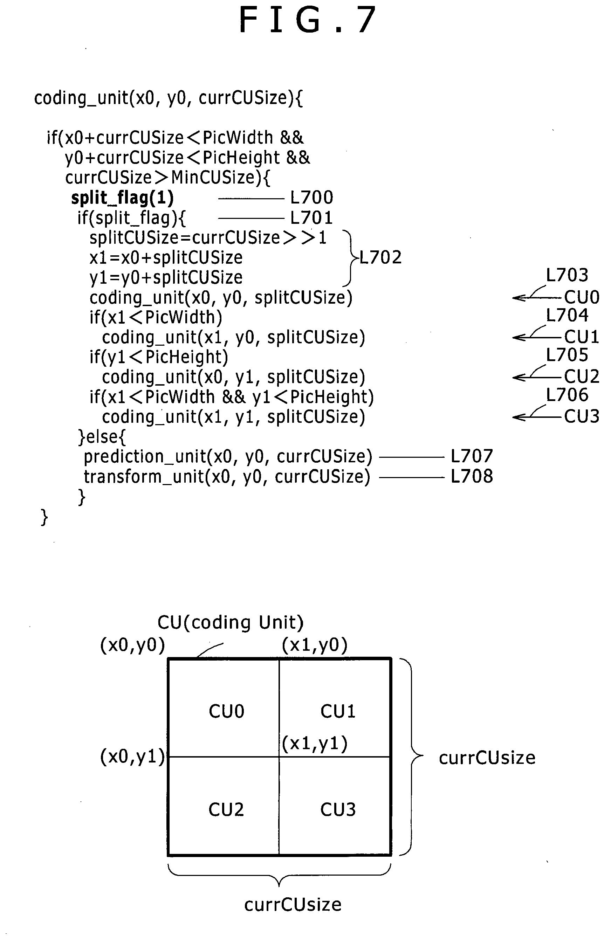

An example of the syntax of the encoding stream for a CU of the related art is described while referring to Fig. 7. In this same figure, the function coding_unit() indicates the pixel positions for (x0,y0) and also shows the encoding syntax for the CU of the size in currCUSize. Here, PicWidth is the picture width (number of pixels), PicHeight is the pixel height (number of pixels), and MinCUSize is the minimum size of CU.

In the figure, split_flag is a 1 bit flag showing whether a CU is partitioned into four units (1) or not (0) relative to the current CU.

If the split_flag is 1, the current CU is partitioned into four units. In this case, the splitCUSize of the partitioned CU size is set as 1/2 the currCUSize of the current CU size; and the horizontal partition position of X1, and the vertical partition position of y1 are respectively set as x1 = x0 + splitCUSize, y1 = y0 + splitCUSize (L702). The four partitioned CU (CU₀-CU₃) are next stored by recursively summoning the coding_unit() (L703 to L706). Whether or not to further perform partitioning is specified by way of the split_flag in the same way even among each of the four partitioned CU. This type of recursive summoning is performed as long as the CU size is the same or larger than the MinCUSize.

If the split_flag is 0, this CU is confirmed as the encoding unit and the encoding is the main processing. The prediction processing information (function prediction_unit())(L707), and the direct conversion information for prediction error (function transform_unit()) (L708) are stored. Direct conversion processing is not directly related to the present invention and so is omitted from these specifications.

The L707 stores prediction processing information (prediction_unit()) for example including intra-prediction unit or inter-prediction unit identifiers, and in the case of intra-prediction stores information showing the prediction direction (refer to Fig. 2 or Fig. 3); and in the case of inter-prediction stores information showing the CU internal partition information and the motion vector (refer to Fig. 4) or. However, the present invention is not limited to the prediction processing method and information content for the prediction processing method.

The more (smaller) the CU is partitioned, the tinier the size at which prediction processing can be performed, however a larger number of CU requires an equivalent amount of prediction information so the encoding quantity increases.

In the present embodiment, the prediction mode setter unit 110 includes a parent CU prediction unit 1400 in order to reduce the quantity of prediction information when the number of partitioned CU increases. The internal processing in the prediction mode setter unit 110 is described next.

### <Processing content of prediction mode setter unit>

The processing content of the prediction mode setter unit 110 in the first embodiment is described next.

### (1) Overview of entire processing

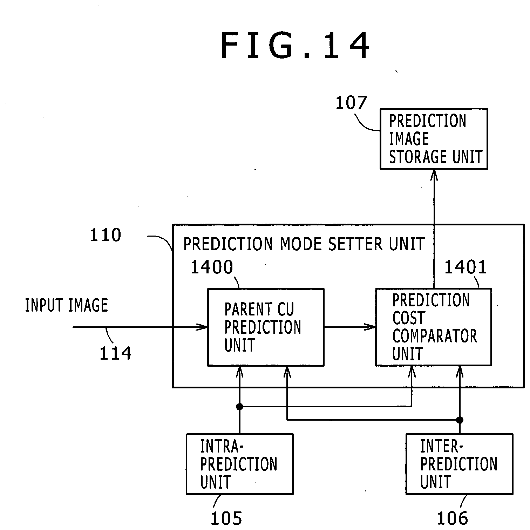

Fig. 14 is a structural view of the prediction mode setter unit 110.

The prediction mode setter unit 110 contains a parent CU prediction unit 1400 and a prediction cost comparator unit 1401. The parent CU prediction unit 1400 as described later on, stores the prediction image of the parent CU for the encoding target CU, and calculates the prediction cost when the current CU prediction processing is replaced with a portion of the prediction image of the parent CU.

The prediction cost comparator unit 1401 compares a plurality of intra-prediction processing and inter-prediction images in a plurality of CU sizes, and the prediction cost from the above parent CU prediction unit 1400; sets the prediction processing that provides a minimum prediction cost, and stores the prediction images obtained from this prediction processing into the prediction image storage unit 107. There are no restrictions on methods for calculating the prediction cost in the present invention however, the prediction cost may be defined for example by the total sum of the absolute difference between the input image 114 and the prediction image and the weighted sum of the total bit quantity required in the prediction information. According to this definition, the nearer the prediction image is to the input image, and also the smaller the bit quantity required in the prediction information, the higher the encoding efficiency of the prediction processing becomes.

### (2) Parent CU prediction unit details

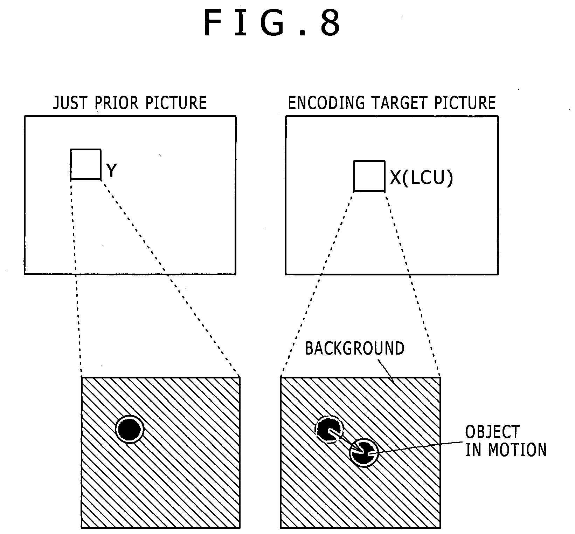

The parent CU prediction unit 1400 generates and stores prediction images for the parent CU of the encoding target CU in advance, and calculates the prediction cost for the encoding target CU prediction process, when a portion of the prediction image of this parent CU was replaced. Situations where substitution of the parent CU prediction image is effective are described next while referring to Fig. 8.

As shown in Fig. 8, the case where the LCU(X) of the encoding target for a certain encoding target picture and a certain region Y for the just prior picture (picture directly in front) have largely the same background and the moving object is only present in its interior is assumed. In this case, high accuracy prediction is possible for LCU(X) prediction processing by dividing the processing into prediction processing of the overall background, and prediction processing of the object portion which is the internal motion. The LCU(X) can thereupon be partitioned into a background CU and a motion object CU, and individual prediction processing may be specified for each CU.

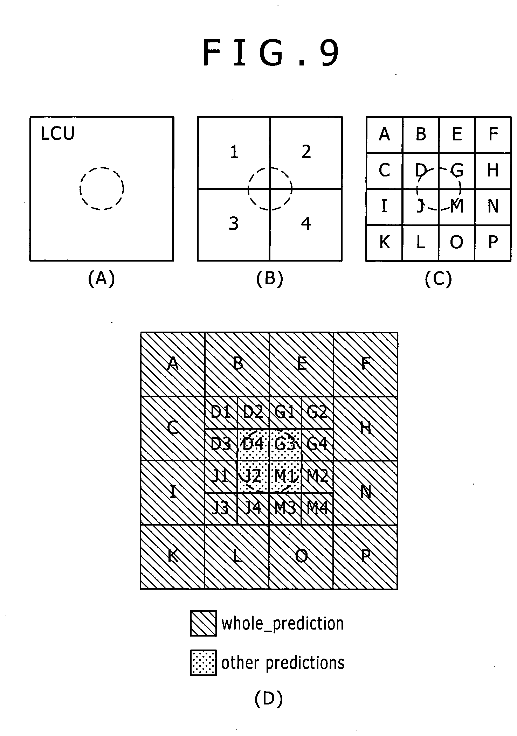

However, when partitioning CU by using the quadtree structure as described above, the number of partitioned CU increases according to the motion object's position within the LCU. Consequently, there are also cases where amount of prediction information increases. This type of case is described while referring to Fig. 9.

When there is a moving object near the center of the LCU as shown in (A) in Fig. 9, then partitioning can be performed to separate the background and the object section into different CU. The LCU of the same figure (A) is first of all partitioned one time into four CU (1 through 4) as shown in the same figure (B) . The CU(1) through CU(4) as shown in the same figure (B) contain both many objects and backgrounds so that CU(1) through CU(4) are each partitioned. In this way, CU(1) is partitioned into CU(A-D), CU(2) is partitioned into CU(E-H), CU(3) is partitioned into CU(I-L), and CU(4) is partitioned into CU(M-P). Among the 16 CU, CU(D), CU(G), CU(J), and CU(M) already include both many objects and backgrounds and so are partitioned even further. In this way, , CU(D) is further partitioned into CU(D1-D4), CU(G) is further partitioned into CU(G1-G4), CU(J) is further partitioned into CU(J1-J4), CU(M) is further partitioned into CU(M1-M4) (in the same figure (D)). Among these, CU(D4), CU(G3), CU(J2), and CU(M1) contain many objects only, and all other CUs contain many backgrounds only. High accuracy prediction processing can therefore be achieved in CU(D4), CU(G3), CU(J2), CU(M1) by prediction processing that accounts for object movement, and for all other CU by prediction processing that accounts for background portion movement.

However, partitioning the CU into finer portions as described above requires storing prediction processing information for all 24 CUs as shown in the same figure (D), so that the prediction processing information increases.

Whereupon the prediction mode setter unit 110 of the first embodiment is capable of selecting either of setting prediction results for pre-obtained prediction images from the parent CU prediction processing or performing prediction processing of individual CU, without always having to store prediction processing information for each and every individual CU.

The parent CU prediction unit 1400, calculates the former or namely the calculates the prediction cost when substitution by the parent CU prediction image was selected, and conveys the prediction cost results to the prediction cost comparator unit 1401. The prediction cost comparator unit 1401 compares the normal prediction processing of the latter described above or namely the prediction cost of normal inter-prediction or intra-prediction with the prediction cost of the former from the parent CU prediction unit 1400, and selects the prediction processing having the small prediction cost.

Hereafter, an example of the syntax for the CU for the encoding stream of the first embodiment is described.

### (3) Example of CU syntax

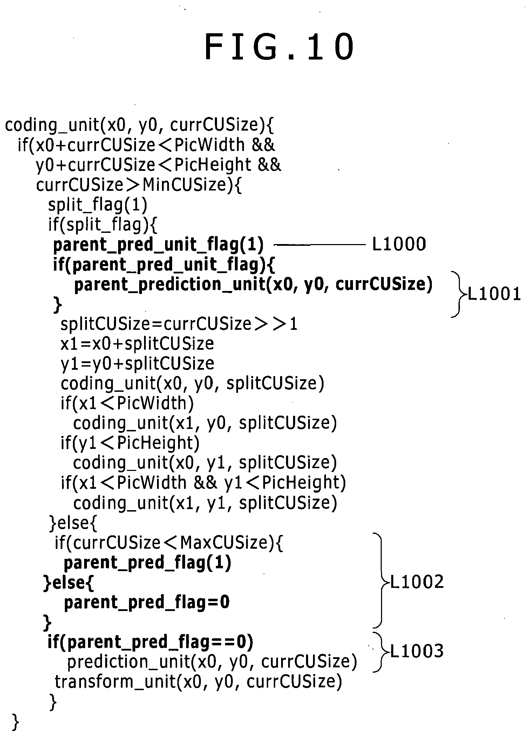

An example of the syntax for the CU of the encoding stream in the first embodiment is described next with reference to Fig. 10.

One feature different from the syntax (Fig. 7) of the CU of the related art in the case of split_flag=1 or in other words in the case of partitioning the current CU into four child CU is that the syntax includes 1 bit parent_pred_unit_flag and storage or not of prediction processing information in the current CU size is specified by a (1) or a (0) (L1000), and the prediction processing information is stored when the parent_pred_unit_flag == 1, (parent_prediction_unit() function in the same figure)(L1001).

In the case of split_flag==0, or namely the current CU size is specified with no further partitioning, and in the case of a CU targeted for encoding, the syntax includes a 1 bit parent_pred_flag, and the flag specifies the parent CU prediction image or namely substitution with a portion of the prediction image obtained in the prediction processing specified by the parent_prediction_unit (1) or specified performing separate prediction processing (0) (L1002).

When the parent_pred_flag == 0, information for other prediction processing is stored by way of the prediction_unit() function.

When the parent_pred_flag == 1, an image for a position equivalent to a position of the encoding target CU among the prediction image of the parent CU is set as the prediction image for the encoding target CU. Prediction processing information for the current CU is not needed. Accordingly, the more the CU having a parent_pred_flag== 1, the more a reduction in the information quantity can be expected.

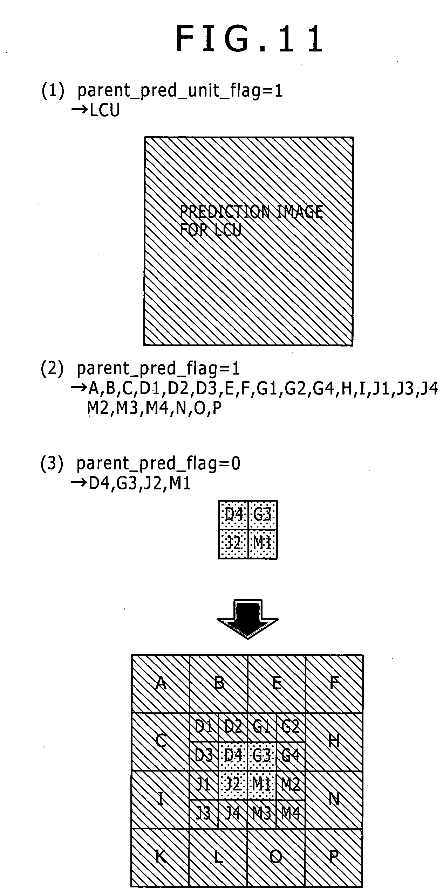

A specific example of a CU syntax and the processing within the prediction mode setter unit 110 is described while referring to Fig. 11.

The CU partitioning pattern is identical to that in Fig. 9(D). The prediction processing is first of all set at the LCU size as shown in Fig. 11 in the present CU prediction unit 1400. The present invention is not limited to this method for setting the prediction processing and may for example calculate the cost value as defined by the bit-weighted sum of prediction information for recording the prediction processing, and the difference between the input image 114 and prediction image from results carried out by the plural inter-prediction and intra-prediction, and setting the prediction processing having the minimum cost. The prediction images obtained by this prediction processing are stored within the parent CU prediction unit 1400 as prediction images for the parent CU. The parent_pred_unit_flag = 1 is then set in the LCU syntax and the prediction processing information that was set, is stored in the parent_prediction_unit().

A decision to utilize the prediction image for this parent CU (LCU) as prediction results is made for all CU obtained from partitioning an LCU the same as in Fig. 9(D). The present invention is not limited to this decision processing. As one example, the prediction cost comparator unit 1401 may compare the prediction cost when the parent CU prediction image was set as the prediction results; with the prediction cost values from plural prediction processing when inter-prediction and when intra-prediction were carried out separately, and select the prediction processing having the small prediction cost value.

This type of selection processing for prediction processing sets is utilized to set;
(1) the following CU for using the parent CU prediction image as prediction results :
   CU(A), CU(B), CU(C), CU(D1), CU(D2), CU(D3), CU(E), CU(F), CU(G1), CU(G2), CU(G4), CU(H), CU(I), CU(J1), CU(J3), CU(J4), CU(M2), CU(M3), CU(M4), CU(N ), CU(O), CU(P)
(2) the following CU for performing separate prediction processing:
   CU(D4), CU(G3), CU(J2), CU(M1)

In this case, the CU in (1) is set so the parent_pred_flag=1, and in the parent CU prediction unit 1400, the prediction images for locations corresponding to each of the CU positions from the prediction image of the parent CU(LCU), are set as the prediction images for each of the CU.

For the CU in (2), the setting is parent_pred_flag=0, and prediction processing information for each CU is stored in the parent_prediction_unit().

The above processing is capable of lowering the information quantity of the prediction processing relative to the CU in (1) compared to the related art and therefore an improvement in the compression ratio can be expected.

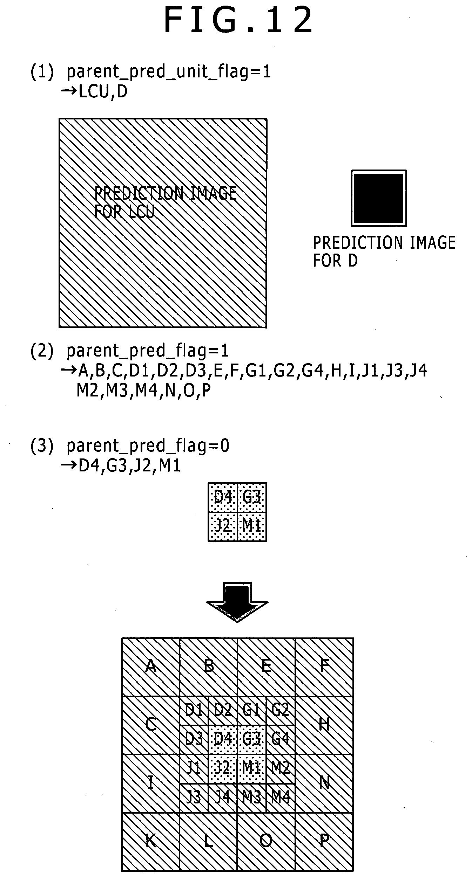

In the present embodiment, the number of parent CU is not always necessarily limited to one. As shown in Fig. 12, two of the LCU and CU(D) ("D" in Fig. 9(C), or namely equivalent to the parent CU of CU(D1) through CU(D3)) are specified with parent_pred_unit_flag=1, and when that prediction processing is stored in the parent_prediction_unit(), the results overwritten on just the location equivalent to the CU(D) position in the LCU prediction image form the prediction image of the parent CU by way of the inclusive relationship of the LCU and CU(D). The prediction image for this parent CU is applied to the CU in the above (1) (See Fig. 12).

As shown in Fig. 12, the prediction processing information quantity increases by a portion equivalent to the parent_prediction_unit() of the CU(D) compared to the case of Fig. 11. However, a higher accuracy prediction processing can be separately selected for a location on the CU(D) from the LCU, so that an improved compression ratio can be expected to result from the improved prediction accuracy, and reduction in prediction difference information.

The present embodiment allows selecting performing the prediction processing individually on each CU, or utilizing the prediction image of the parent CU unchanged; there are no restrictions on combinations of prediction processing techniques for child CU prediction processing and parent CU prediction processing, and optional combinations of inter-prediction and intra-prediction can be selected. Moreover, for inter-prediction, a variety of prediction methods can be applied such as forward prediction utilizing just the prior (time-wise) picture as the reference picture, or bi-direction prediction utilizing the prior and latter (time-wise) pictures.

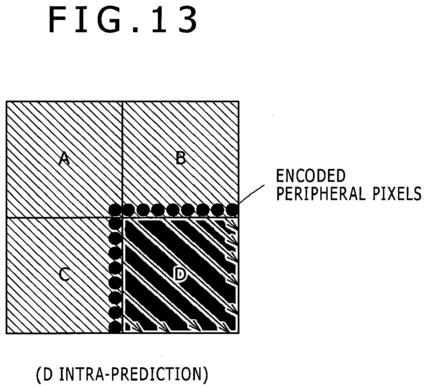

However, when performing intra-prediction on CU(D) as shown in Fig. 13, and further when utilizing encoded images (prior to deblock processing) around the encoded images in the periphery of the CU(D), then encoding processing (however, prior to the deblock processing) of CU(A), CU(B), and CU(C) in the periphery must be completed.

In the image encoding device of the present embodiment as described above, the prediction mode setter unit 110 can select either using the prediction image of the parent CU or performing separate prediction processing in order to perform prediction processing of a particular CU, and stores the prediction processing information in the encoding stream just when performing separate prediction processing. An improved compression ratio can in this way be achieved by lowering the prediction information quantity of the CU.

### <Image decoding device structure>

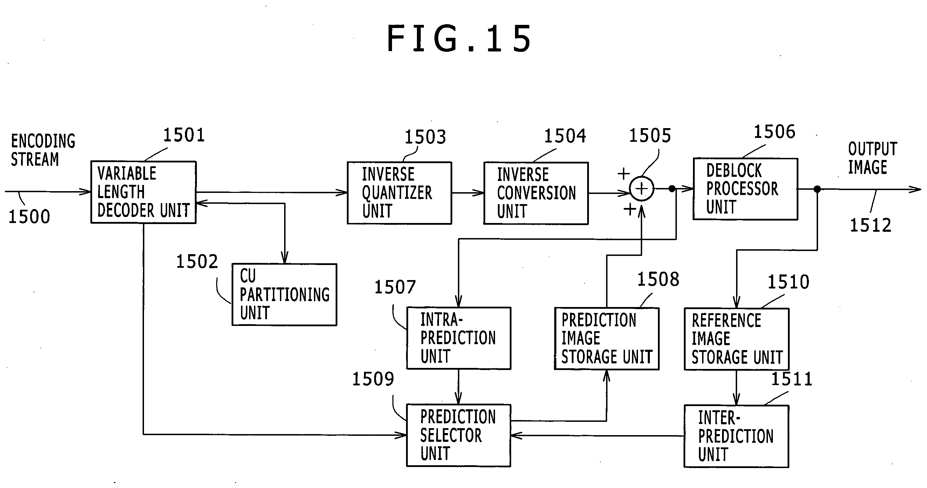

Fig. 15 is a drawing showing the overall structure of the image decoding device of the embodiment. The image decoding device in Fig. 15 contains a variable length decoder unit 1501 to input and to decode the encoding stream 1500; a CU partitioning unit 1502 to partition the CU based on the CU size information obtained by the variable length decoder unit 1501; an inverse quantizer unit 1503 to inverse-quantize the conversion-quantized prediction error image within the CU; an inverse conversion unit 1504 to inverse-convert the converted prediction difference image; an adder 1505 to add the prediction difference image output from the inverse conversion unit 1504, to the prediction image stored in the prediction image storage unit 1508; and a deblock processor unit 1506 to perform deblock processing on the summed results of the image; and outputs the output image 1512.

The video decoding device of the present embodiment includes two prediction processing systems for generating the above described prediction images. A first system by the intra-prediction contains an intra-prediction unit 1507 to perform intra-prediction by utilizing image signals (prior to deblocking) of decoded CU stored consecutively in CU units. A second system by the inter-prediction contains a reference image storage unit 1510 to store output images and an inter-prediction unit 1511 to perform motion compensation using the reference images stored in the reference image storage unit 1510, and motion vectors decoded by the variable length decoder unit 1501, and to obtain inter-prediction images. A prediction selector unit 1509 generates prediction images according to prediction processing information for the CU decoded by the variable length decoder unit 1501, and stores the prediction images in the prediction image storage unit 1508.

### <Processing content of prediction selector unit (decoding side)>

The processing content of the prediction selector unit 1509 for the image decoding side is described next while referring to the drawing.

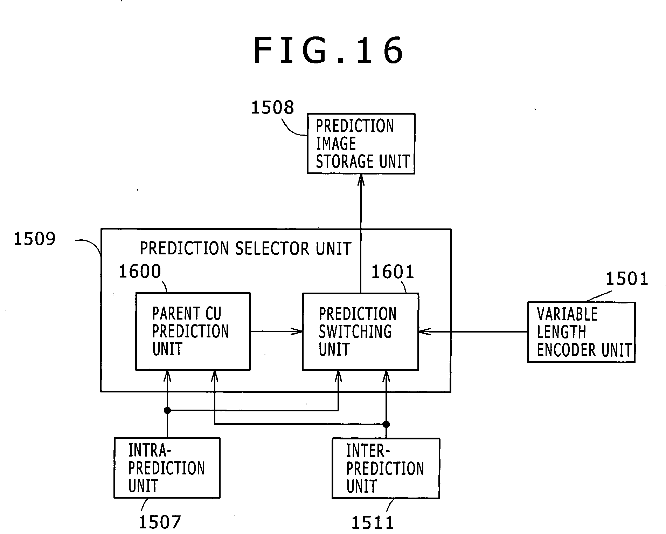

Fig. 16 is a drawing showing the internal structure of the prediction selector unit 1509. The prediction switching unit 1601 switches the prediction processing and generates prediction images based on prediction processing information for each CU decoded by the variable length decoder unit 1501, and stores this prediction images in the prediction image storage unit 1508.

As specific examples of the prediction processing information for the CU, information for the parent_pred_unit_flag, parent_prediction_unit(), parent_pred_flag, and prediction_unit() are stated in Fig. 10. The meaning of the encoding stream syntaxes in Fig. 10, and the processing content of the parent CU prediction unit 1600 corresponding to these syntaxes are the same as the parent CU prediction unit 1400 for the encoding device so a description is omitted.

As described above, the prediction selector unit 1509 for the image decoding device of the present embodiment is capable of utilizing the parent CU prediction images as prediction results for the encoding target CU, according to the prediction processing information of the encoding stream CU. The prediction processing information for the encoding target CU within the encoding stream can in this way be reduced so that an improved compression ratio can be achieved.

The present invention as described above is capable of selecting either the parent CU prediction image or separate prediction processing as the prediction processing for the encoding target CU. If utilization of the parent CU prediction image was selected, a prediction image for the encoding target CU can be generated by performing the same parent CU prediction processing in the image decoding device without sending the prediction processing information of the encoding target CU per the image encoding device, and the prediction processing information quantity can be reduced.

The functions of the present invention can also be rendered by software program code for achieving the functions of the embodiment. In such cases, a recording medium on which the program code is recorded is provided to the system or device, and the computer (or the CPU or MPU) of this system or device loads (reads out) the program code stored on the recording medium. In this case, the program code itself loaded from the recording medium, achieves the prior related functions of the embodiment, and this program code itself, and the recording medium storing this program code configure the present invention. The recording medium for supplying this type of program code is for example a flexible disk, CD-ROM, DVD-ROM, hard disk, optical disk, magnetooptical disk, CD-R, magnetic tape, a non-volatile memory card, or ROM, etc.

Also, the OS (operating system) operating on the computer may execute all or a portion of the actual processing based on instructions in the program code, and may be made capable of implementing the functions of the embodiment by way of this processing. Further, after this program code loaded (read out) from the recording medium, and is written onto the memory on this computer, the CPU of the computer for example may execute all or a portion of the actual processing based on instructions in the program code and implement the functions of the above described embodiment by way of this processing.

The program code for the software to implement the functions of the embodiment may for example be distributed over a network, and may be stored in a storage means such as a hard disk or memory of the system or device or on a recording medium such as a CD-RW, CD-R, and during usage the computer (or the CPU or MPU) of that system or device may load and execute the program code stored on the relevant storage means or storage medium.

### List of Reference Signs

100 CU partitioning unit
110 Prediction mode setter unit
105 Intra-prediction unit
106 Inter-prediction unit
102 Conversion unit
103 Quantizer unit
104 Variable length encoder unit
1400 Parent CU prediction unit
1401 Prediction cost comparator unit
1501 Variable, length decoder unit
1502 CU partitioning unit
1503 Inverse quantizer unit
1504 Inverse conversion unit
1507 Intra-prediction unit
1511 Inter-prediction unit
1509 Prediction selector unit
1600 Parent CU prediction unit
1601 Prediction switching unit

## Claims

1. A video decoding method that performs variable-length decoding on an input encoding stream (1500), performs inverse-quantizing and inverse DCT in coding units partitioned in a quadtree structure to obtain a prediction difference image, adds the prediction difference image and a prediction image, and outputs a video (1512), the video decoding method being **characterized by** comprising:
when the encoding stream (1500) is encoded in coding units including both a first coding unit, and a second coding unit that is larger in size than the first coding unit and is a parent unit from which the first coding unit is obtained by partitioning and wherein no DCT processing is performed on the second coding unit, generating for decoding a prediction image from the first coding unit and a prediction image from the second coding unit of the encoding stream (1500) and
utilizing, in accordance with prediction processing information in the encoding stream (1500), a portion of the prediction image generated from the second coding unit as the prediction image of the corresponding first coding unit.

2. The video decoding method according to claim 1, further comprising:
selecting for each first coding unit to either utilize a corresponding portion of the prediction image generated from the second coding unit or generate a separate prediction image.

3. The video decoding method according to claim 1 or 2, further comprising:
extracting flag information indicating whether or not to generate a prediction image from the second coding unit from the encoding stream (1500); and
generating a prediction image from the second coding unit, and setting a portion of the prediction image generated from the second coding unit as the prediction image of the first coding unit when the flag information indicates generation of a prediction image from the second coding unit.

4. A video encoding method that partitions an input image (114) into coding units in a quadtree structure, generates internal prediction images of the coding units, obtains prediction difference images from the input images and the internal prediction images, and outputs an encoding stream (115) by performing, DCT, quantization and variable-length encoding on the prediction difference images, the video encoding method being **characterized by** comprising:
generating a prediction image from a first coding unit, and a prediction image from a second coding unit wherein no DCT processing is performed thereon, and wherein the second coding unit is larger in size than the first coding unit and is a parent unit from which the first coding unit is obtained by partitioning; and
utilizing a corresponding portion of the prediction image generated from the second coding unit as the prediction image of the first coding unit.

5. The video encoding method according to claim 4, further comprising:
selecting for each first coding unit to either utilize a corresponding portion of the prediction image generated from the second coding unit as the first coding unit or generate a separate prediction image.

6. The video encoding method according to claim 4 or 5, further comprising:
storing flag information indicating whether or not to generate prediction information from the second coding unit in the encoding stream (115); and
storing information for generating the prediction image from the second coding unit in the encoding stream (115) when the flag information indicates generating the prediction image from the second coding unit.

## Patentansprüche

1. Videodekodierverfahren, das eine längenvariable Dekodierung an einem kodierten Eingangsvideodatenstrom (1500) durchführt, eine Inversquantisierung und ein inverses DCT an in einer Quadtree-Struktur unterteilten Kodiereinheiten durchführt, um ein Voraussagedifferenzbild zu erhalten, das Voraussagedifferenzbild und ein Voraussagebild addiert und ein Video (1512) ausgibt, wobei das Videodekodierverfahren **dadurch gekennzeichnet ist, dass**
wenn der kodierte Datenstrom (1500) in Kodiereinheiten kodiert ist, die sowohl eine erste Kodiereinheit als auch eine zweite Kodiereinheit enthalten, deren Größe größer ist als die der ersten Kodiereinheit und die eine Stammeinheit darstellt, von der die erste Kodiereinheit durch Unterteilung erhalten wurde, und wobei keine DCT-Verarbeitung an der zweiten Kodiereinheit durchgeführt wird, zum Dekodieren ein Voraussagebild aus der ersten Kodiereinheit und ein Voraussagebild aus der zweiten Kodiereinheit des kodierten Datenstroms (1500) erzeugt wird, und
gemäß der Voraussageverarbeitungsinformation in dem kodierten Datenstrom (1500) ein Abschnitt des aus der zweiten Kodiereinheit erzeugten Voraussagebilds als das Voraussagebild der entsprechenden ersten Kodiereinheit verwendet wird.

2. Videodekodierverfahren nach Anspruch 1, in dem ferner
für jede erste Kodiereinheit ausgewählt wird, ob entweder ein entsprechender Abschnitt des aus der zweiten Kodiereinheit erzeugten Voraussagebilds verwendet wird oder ein eigenes Voraussagebild erzeugt wird.

3. Videodekodierverfahren nach Anspruch 1 oder 2, in dem ferner
Markierungsinformation gewonnen wird, die anzeigt, ob ein Voraussagebild aus der zweiten Kodiereinheit aus dem kodierten Datenstrom (1500) zu erzeugen ist, und
ein Voraussagebild aus der zweiten Kodiereinheit erzeugt wird und ein Abschnitt des aus der zweiten Kodiereinheit erzeugten Voraussagebilds als das Voraussagebild der ersten Kodiereinheit eingestellt wird, wenn die Markierungsinformation angibt, dass ein Voraussagebild aus der zweiten Kodiereinheit zu erzeugen ist.

4. Videokodierverfahren, das ein Eingabebild (114) in Kodiereinheiten in einer Quadtree-Struktur unterteilt, interne Voraussagebilder der Kodiereinheiten erzeugt, Voraussageunterschiedsbilder aus den Eingabebildern und den internen Voraussagebildern erhält, und einen kodierten Datenstrom (115) ausgibt, indem DCT, Quantisierung und längenvariable Kodierung an den Voraussageunterschiedsbildern durchgeführt wird, wobei das Videokodierverfahren **dadurch gekennzeichnet ist, dass**
ein Voraussagebild aus einer ersten Kodiereinheit und ein Voraussagebild aus einer zweiten Kodiereinheit erzeugt wird, wobei daran keine DCT-Verarbeitung durchgeführt wird, und wobei die Größe der zweiten Kodiereinheit größer ist als die der ersten Kodiereinheit und sie eine Stammeinheit darstellt, aus der die erste Kodiereinheit durch Unterteilen erhalten wurde, und
ein entsprechender Abschnitt des aus der zweiten Kodiereinheit erzeugten Voraussagebilds als das Voraussagebild der ersten Kodiereinheit verwendet wird.

5. Videokodierverfahren nach Anspruch 4, in dem ferner
für jede erste Kodiereinheit ausgewählt wird, ob entweder ein entsprechender Abschnitt des aus der zweiten Kodiereinheit erzeugten Voraussagebilds für die erste Kodiereinheit zu verwenden ist oder ein eigenes Voraussagebild zu erzeugen ist.

6. Videokodierverfahren nach Anspruch 4 oder 5, in dem ferner
Markierungsinformation gespeichert wird, die angibt, ob aus der zweiten Kodiereinheit in dem kodierten Datenstrom (115) Voraussageinformation zu erzeugen ist, und
Information gespeichert wird, um das Voraussagebild aus der zweiten Kodiereinheit in dem kodierten Datenstrom (115) zu erzeugen, wenn die Markierungsinformation angibt, dass das Voraussagebild aus der zweiten Kodiereinheit zu erzeugen ist.

## Revendications

1. Procédé de décodage vidéo qui exécute un décodage de longueur variable sur un flux d'encodage d'entrée (1500), exécute une quantification inverse et une transformée DCT inverse dans des unités de codage partitionnées en une structure en arbre quaternaire pour obtenir une image de différence de prédiction, additionne l'image de différence de prédiction et une image de prédiction, et délivre en sortie une vidéo (1512), le procédé de décodage vidéo étant **caractérisé en ce que** comprenant :
lorsque le flux d'encodage (1500) est encodé en unités de codage incluant à la fois une première unité de codage, et une deuxième unité de codage qui est plus grande en taille que la première unité de codage et est une unité parente à partir de laquelle la première unité de codage est obtenue par partitionnement et dans lequel aucun traitement DCT n'est exécuté sur la deuxième unité de codage, la génération pour décodage d'une image de prédiction à partir de la première unité de codage et d'une image de prédiction à partir de la deuxième unité de codage du flux d'encodage (1500) et
l'utilisation, conformément à une information de traitement de prédiction dans le flux d'encodage (1500), d'une partie de l'image de prédiction générée à partir de la deuxième unité de codage comme l'image de prédiction de la première unité de codage correspondante.

2. Procédé de décodage vidéo selon la revendication 1, comprenant en outre :
la sélection pour chaque première unité de codage soit d'utiliser une partie correspondante de l'image de prédiction générée à partir de la deuxième unité de codage, soit de générer une image de prédiction séparée.

3. Procédé de décodage vidéo selon la revendication 1 ou 2, comprenant en outre :
l'extraction d'une information de drapeau indiquant s'il convient ou non de générer une image de prédiction à partir de la deuxième unité de codage à partir du flux d'encodage (1500) ; et
la génération d'une image de prédiction à partir de la deuxième unité de codage, et la fixation d'une partie de l'image de prédiction générée à partir de la deuxième unité de codage comme l'image de prédiction de la première unité de codage lorsque l'information de drapeau indique la génération d'une image de prédiction à partir de la deuxième unité de codage.

4. Procédé d'encodage vidéo qui partitionne une image d'entrée (114) en unités de codage en une structure en arbre quaternaire, génère des images de prédiction internes des unités de codage, obtient des images de différence de prédiction à partir des images d'entrée et des images de prédiction internes, et délivre en sortie un flux d'encodage (115) en exécutant une transformée DCT, une quantification, et un encodage de longueur variable sur les images de différence de prédiction, le procédé d'encodage vidéo étant **caractérisé en ce que** comprenant :
la génération d'une image de prédiction à partir d'une première unité de codage et d'une image de prédiction à partir d'une deuxième unité de codage, dans lequel aucun traitement DCT n'est exécuté sur celles-ci et dans lequel la deuxième unité de codage est plus grande en taille que la première unité de codage et est une unité parente à partir de laquelle la première unité de codage est obtenue par partitionnement ; et
l'utilisation d'une partie correspondante de l'image de prédiction générée à partir de la deuxième unité de codage comme l'image de prédiction de la première unité de codage.

5. Procédé d'encodage vidéo selon la revendication 4, comprenant en outre :
la sélection pour chaque première unité de codage soit d'utiliser une partie correspondante de l'image de prédiction générée à partir de la deuxième unité de codage comme la première unité de codage, soit de générer une image de prédiction séparée.

6. Procédé d'encodage vidéo selon la revendication 4 ou 5, comprenant en outre :
le stockage d'une information de drapeau indiquant s'il convient ou non de générer une information de prédiction à partir de la deuxième unité de codage dans le flux d'encodage (115) ; et
le stockage d'une information pour générer l'image de prédiction à partir de la deuxième unité de codage dans le flux d'encodage (115) lorsque l'information de drapeau indique la génération de l'image de prédiction à partir de la deuxième unité de codage.
